# EUROPÄISCHE PATENTSCHRIFT

(11) **EP 1 356 206 B1**
(45) Veröffentlichungstag und Bekanntmachung des Hinweises auf die Patenterteilung: **18.04.2007**
(21) Anmeldenummer: 02740414.4
(22) Anmeldetag: 01.02.2002
(51) Int. Cl.: F04B 1/00

(54) **VERFAHREN ZUM AUFRECHTERHALTEN EINER KONSTANTEN AUSGANGSGRÖSSE EINER FÖRDERPUMPE, Z.B. IHRES FÖRDERVOLUMENS, DIE VON EINER IN IHRER DREHZAHL VARIABLEN ANTRIEBSVORRICHTUNG ANGETRIEBEN WIRD, SOWIE VORRICHTUNG ZUR DURCHFÜHRUNG DES VERFAHRENS**
METHOD FOR MAINTAINING A CONSTANT OUTPUT VARIABLE OF A FEED PUMP, E.G. THE DISPLACED VOLUME THEREOF WHICH IS ACTUATED BY A SPEED VARIABLE DRIVE DEVICE, AND A DEVICE FOR CARRYING OUT SAID METHOD
PROCEDE POUR MAINTENIR UNE GRANDEUR DE SORTIE CONSTANTE, PAR EXEMPLE LE DEBIT, D'UNE POMPE D'ALIMENTATION ENTRAINEE PAR UN DISPOSITIF D'ENTRAINEMENT VARIABLE DANS SA VITESSE, AINSI QUE DISPOSITIF POUR L'EXECUTION DE CE PROCEDE

(30) Priorität: 02.02.2001 DE 10104635
(43) Veröffentlichungstag der Anmeldung: 29.10.2003
(73) Patentinhaber: Joma-Hydromechanic GmbH, 72411 Bodelshausen (DE)
(72) Erfinder: SCHNEIDER, Willi, 97616 Bad Neustadt (DE)
(74) Vertreter: Steimle, Josef
(86) Internationale Anmeldenummer: PCT/EP2002/001055
(87) Internationale Veröffentlichungsnummer: WO 2002/084117

(56) Entgegenhaltungen:
- EP-A- 0 497 293
- DE-A- 3 622 217
- DE-A- 3 727 633
- DE-A- 3 814 750
- DE-A- 3 819 030
- DE-A- 4 411 628
- DE-A- 4 439 993
- DE-A- 19 612 412
- DE-A- 19 811 400
- DE-A- 19 930 648
- FR-A- 2 519 694
- GB-A- 1 334 769
- US-A- 2 935 242
- US-A- 4 173 152
- US-A- 4 925 370
- US-A- 5 520 517
- PATENT ABSTRACTS OF JAPAN vol. 008, no. 064 (M-285), 27. März 1984 (1984-03-27) -& JP 58 214688 A (TOYODA KOKI KK), 13. Dezember 1983 (1983-12-13)
- PATENT ABSTRACTS OF JAPAN vol. 012, no. 311 (M-734), 24. August 1988 (1988-08-24) -& JP 63 082876 A (KAYSEVEN CO LTD), 13. April 1988 (1988-04-13)

## Beschreibung

Die Erfindung betrifft eine Vorrichtung mit den Merkmalen des Oberbegriffs des Anspruchs 1.

Zur Erzeugung eines Volumenstromes ist es bekannt, Zahnradpumpen einzusetzen. Diese Zahnradpumpen gehören zur Gruppe der Verdrängerpumpen und haben ein konstantes theoretisches Fördervolumen. Für bestimmte Einsatzzwecke sind solche Pumpen allerdings nicht optimal geeignet. Dies ist bspw. der Fall, wenn mit ihrer Hilfe die Schmierölversorgung eines die Zahnradpumpe antreibenden Verbrennungsmotors sichergestellt werden soll.

Zahnradpumpen sind in diesem Falle so zu dimensionieren, dass sie bereits bei kleiner Motordrehzahl das erforderliche Volumen an Schmieröl fördern. Dies bedeutet, dass bei höheren Motordrehzahlen der überwiegende Teil des geförderten Ölvolumens in die Ölwanne zurückgeführt werden muss und dementsprechend eine große Verlustleistung gegeben ist.

Aus diesem Grunde werden sog. variable Flügelzellenpumpen bevorzugt, bei denen sich der Volumenstrom bedarfsweise, d.h. an die Motordrehzahl anpassend, variieren lässt. Bei solchen Pumpen werden ab einer bestimmten Motordrehzahl die Pumpenflügel selbsttätig so verstellt, dass dadurch die Fördermenge und somit die Verlustleistung entsprechend verringert werden. Solche Flügelzellenpumpen sind allerdings konstruktiv aufwendig und dementsprechend teuer.

Das Dokument DE3814750 offenbart eine mehrstufige Fördervorrichtung mit einem stufenlos regelbaren Drehzahlwandler.

Der Erfindung liegt daher die Aufgabe zugrunde, eine Vorrichtung bereit zu stellen, die es ermöglicht, mit Förderpumpen mit konstantem theoretischen Fördervolumen, die von einer in ihrer Drehzahl variablen Antriebsvorrichtung angetrieben werden, eine ständig konstant bleibende Ausgangsgröße, wie Fördervolumen, Pumpendruck oder Ausgangsleistung, zu erzeugen.

Diese Aufgabe wird mit einer Vorrichtung gelöst, die die Merkmale des Anspruchs 1 aufweist.

Erfindungsgemäß wird somit die erste Förderpumpe durch die Antriebsvorrichtung nur mittelbar, d. h. durch einen von einem unmittelbar angetriebenen, stufenlos regelbaren Drehzahlwandler, angetrieben, dessen Übersetzung zur Aufrechterhaltung einer gewünschten Ausgangsgröße, z. B. des Fördervolumens der Förderpumpe, in Abhängigkeit von einer Referenzgröße geregelt wird.

Anstelle einer solchen Doppelanordnung von Förderpumpen lässt sich der gleiche Effekt auch dadurch erzielen, dass beide Förderpumpen zu einer zwei- oder mehrstufigen Fördervorrichtung zusammengefasst sind.

Zur Ansteuerung des Drehzahlwandlers zur Erzielung einer konstanten Ausgangsgröße der Förderpumpe können unterschiedliche Betriebsparameter derselben erfasst werden.

Die Antriebsvorrichtung als auch die Förderpumpen können dabei je nach Anwendungsfall der beiden Verfahren verschieden konzipiert sein.

So wird man z.B. im Automobilbau zur Schmierölversorgung einer Brennkraftmaschine als Förderpumpe bzw. Förderpumpen Zahnradpumpen bevorzugen und als Antriebsvorrichtung die Brennkraftmaschine einsetzen. Ebenso ist die Erfindung im Bereich der Hochdruckhydraulik mit besonderem Vorteil anwendbar.

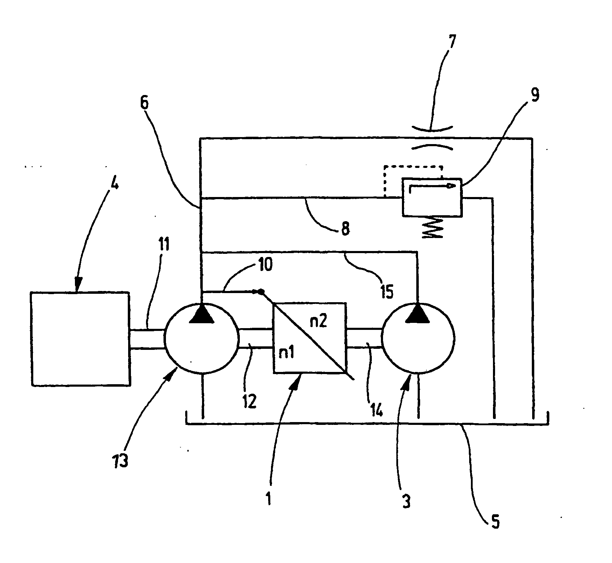

In der Zeichnung ist ein Ausführungsbeispiel der erfindungsgemäßen Vorrichtung veranschaulicht. Die Zeichnung zeigt als Blockschaltbild eine mit zwei Förderpumpen arbeitende Vorrichtung zur Schmierstoffversorgung einer Brennkraftmaschine.

Die in der Zeichnung gezeigte Vorrichtung weist einen durch ein stufenloser Drehzahlwandler 1 gebildeten Drehzahlwandler auf, durch den über eine Abtriebswelle 14 eine Förderpumpe 3 zur Schmierölversorgung eines Verbrennungsmotors 4 antreibbar ist. Der Antrieb des stufenlosen Drehzahlwandlers 1 erfolgt durch den Verbrennungsmotor 4. Das Bezugszeichen 5 bezeichnet die Ölwanne desselben, während das Bezugszeichen 6 den das Schmieröl führenden, an der Förderpumpe 3 angeschlossenen Hauptstrom im Verbrennungsmotor 4 bezeichnet, wobei durch eine Drossel 7 der beim Schmierölkreislauf gegebene Gesamtströmungswiderstand symbolisiert ist.

Mit dem Bezugszeichen 8 ist ein mit einem Druckbegrenzungsventil 9 ausgestatteter Nebenstrom bezeichnet, der vom Hauptstrom 6 abgeleitet ist und wie dieser in die Ölwanne 5 ausmündet.

Das Bezugszeichen 10 bezeichnet ein z.B. das Fördervolumen der Förderpumpe 3 ermittelndes Stellglied, durch das der Drehzahlwandler 1 so geregelt wird, dass auch bei sich ändernden Drehzahlen des mittelbar die Förderpumpe 3 antreibenden Verbrennungsmotors 4 deren Volumenstrom konstant bleibt.

Der Antrieb der Förderpumpe 3 erfolgt durch den Verbrennungsmotor 4, indem dieser über dessen Abtriebswelle 11 eine weitere Förderpumpe 13 und diese über eine Abtriebswelle 12 den stufenlosen Drehzahlwandler 1 und deren Abtriebswelle 14 die Förderpumpe 3 antreibt.

Während die zweite Förderpumpe 3 im Hauptstrom 6 liegt und von dort über das Fühlglied 10 das Getriebe 1 zur Konstanthaltung des Fördervolumens im Hauptstrom 6 angesteuert wird, liegt die erste Förderpumpe 3 in einem zum Nebenstrom 8 parallelen, weiteren Nebenstrom 15.

Sollte, bedingt durch Drehzahlschwankungen des Verbrennungsmotors 4, das Fördervolumen der von diesem angetriebenen zweiten Förderpumpe 13 Schwankungen unterliegen, wird über den durch das Stellglied 10 ansteuerbaren, stufenlos regelbaren Drehzahlwandler 1 die Drehzahl der ersten Förderpumpe 3 so verändert, dass dennoch über den Nebenstrom 15 im Hauptstrom 6 der geforderte Volumenstrom aufrechterhalten bleibt.

## Patentansprüche

1. Mehrstufige Fördervorrichtung mit einer konstanten Ausgangsgröße, z.B. des Fördervolumens oder der Ausgangsleistung, die von einer in ihrer Drehzahl variablen Antriebsvorrichtung (4) angetrieben wird, mit einer ersten Förderpumpe (3), deren Drehzahl zum Erreichen der gewünschten Ausgangsgröße durch einen von der Antriebsvorrichtung (4) angetriebenen und in Abhängigkeit von einer Referenzgröße angesteuerten, stufenlos regelbaren Drehzahlwandler (1) entsprechend verändert wird, wobei zur Erzielung eines konstanten Fördervolumens der Volumenstrom einer zweiten Förderpumpe (13) erfasst, mit der Referenzgröße verglichen und in Abhängigkeit von einer ggf. vorhandenen, sich auf die Volumenmenge beziehenden Differenz der Drehzahlwandler (1) zur Einregelung einer erforderlichen Pumpendrehzahl angesteuert wird, **dadurch gekennzeichnet, dass** ein das Fördervolumen der zweiten Förderpumpe (13) ermittelndes Stellglied (10) für den Drehzahlwandler (1) vorgesehen ist, dass der von der Antriebsvorrichtung (4) angetriebene, die erste Förderpumpe (3) antreibende Drehzahlwandler (1) zwischen der, von der Antriebsvorrichtung (4) angetriebenen zweiten Förderpumpe (13) und der ersten Förderpumpe (3) vorgesehen ist, der, in Abhängigkeit von der Drehzahl der zweiten Förderpumpe (13), die Drehzahl der ersten Förderpumpe (3) entsprechend der Differenz der Ausgangsgröße der zweiten Förderpumpe (13) zu der Referenzgröße verändert und beide Förderpumpen (3 und 13) zu der mehrstufigen Fördervorrichtung zusammengefasst sind.

2. Mehrstufige Fördervorrichtung mit einer konstanten Ausgangsgröße, z.B. des Fördervolumens oder der Ausgangsleistung, die von einer in ihrer Drehzahl variablen Antriebsvorrichtung (4) angetrieben wird, mit einer ersten Förderpumpe (3), deren Drehzahl zum Erreichen der gewünschten Ausgangsgröße durch einen von der Antriebsvorrichtung (4) angetriebenen und in Abhängigkeit von einer Referenzgröße angesteuerten, stufenlos regelbaren Drehzahlwandler (1) entsprechend verändert wird, wobei zur Aufrechterhaltung der Pumpendrehzahl die Ausgangsleistung der zweiten Förderpumpe (13) erfasst und in Abhängigkeit hiervon der Drehzahlwandler (1) derart angesteuert wird, dass die geforderte Leistung von der ersten Förderpumpe (3) auch abgegeben wird, **dadurch gekennzeichnet, dass** ein das Fördervolumen der_zweiten Förderpumpe (13) ermittelndes Stellglied (10) für den Drehzahlwandler (1) vorgesehen ist, dass der von der Antriebsvorrichtung (4) angetriebene, die erste Förderpumpe (3) antreibende Drehzahlwandler (1) zwischen der, von der Antriebsvorrichtung (4) angetriebenen zweiten Förderpumpe (13) und der ersten Förderpumpe (3) vorgesehen ist, der, in Abhängigkeit von der Drehzahl der zweiten Förderpumpe (13), die Drehzahl der ersten Förderpumpe (3) entsprechend der Differenz der Ausgangsgröße der zweiten Förderpumpe (13) zu der Referenzgröße verändert und beide Förderpumpen (3 und 13) zu der mehrstufigen Fördervorrichtung zusammengefasst sind.

3. Vorrichtung nach Anspruch 1 oder 2, **dadurch gekennzeichnet, dass** die Antriebsvorrichtung (4) eine Brennkraftmaschine ist und die Förderpumpen (3, 13) zur Schmierölversorgung der Brennkraftmaschine dienen.

4. Vorrichtung nach Anspruch 1, 2 oder 3, **dadurch gekennzeichnet, dass** die Förderpumpen (3, 13) Zahnradpumpen sind.

## Claims

1. Multistage feed device having a constant output variable, e.g. the displaced volume or the output power, which is driven by a variable-speed drive device (4), comprising a first feed pump (3), the speed of which is changed appropriately for achieving the desired output variable by a continuously controllable speed variator (1) driven by the drive device (4) and actuated as a function of a reference variable, for achieving a constant displaced volume the volume flow rate of a second feed pump (13) being determined and compared with the reference variable and, depending on an optionally present difference relating to the volume flow rate, the speed variator (1) being actuated for setting a required pump speed, **characterized in that** an actuator (10) determining the displaced volume of the second feed pump (13) is provided for the speed variator (1), and **in that** the speed variator (1) driven by the drive device (4) and driving the first feed pump (3) is provided between the second feed pump (13), driven by the drive device (4) and the first feed pump (3), which speed variator, as a function of the speed of the second feed pump (13) changes the speed of the first feed pump (3) according to the difference of the output variable of the second feed pump (13) relative to the reference variable, and the two feed pumps (3 and 13) are combined into the multistage feed device.

2. Multistage feed device having a constant output variable, e.g. the displaced volume or the output power, which is driven by a variable-speed drive device (4), comprising a first feed pump (3), the speed of which is changed appropriately for achieving the desired output variable by a continuously controllable speed variator (1) driven by the drive device (4) and actuated as a function of a reference variable, for maintaining the pump speed the output power of the second feed pump (13) being determined and, as a function thereof, the speed variator (1) being actuated in such a way that the required performance of the first feed pump (3) is also delivered, **characterized in that** an actuator (10) determining the displaced volume of the second feed pump (13) is provided for the speed variator (1), and **in that** the speed variator (1) driven by the drive device (4) and driving the first feed pump (3) is provided between the second feed pump (13), driven by the drive device (4) and the first feed pump (3), which speed variator, as a function of the speed of the second feed pump (13), changes the speed of the first feed pump (3) according to the difference of the output variable of the second feed pump (13) relative to the reference variable, and the two feed pumps (3 and 13) are combined into the multistage feed device.

3. Device according to Claim 1 or 2, **characterized in that** the drive device (4) is an internal combustion engine and the feed pumps (3, 13) serve for supplying lubricating oil to the internal combustion engine.

4. Device according to Claim 1, 2 or 3, **characterized in that** the feed pumps (3, 13) are gear pumps.

## Revendications

1. Dispositif d'alimentation à plusieurs étages avec une grandeur de sortie constante, par exemple le volume déplacé ou la puissance de sortie, qui est entraîné par un dispositif d'entraînement (4) à vitesse de rotation variable, avec une première pompe d'alimentation (3) dont la vitesse de rotation, pour atteindre la grandeur de sortie souhaitée, est variable de manière appropriée à l'aide d'un convertisseur de vitesse (1) réglable en continu entraîné par le dispositif d'entraînement (4) et commandé en fonction d'une grandeur de référence, moyennant quoi, pour atteindre un volume déplacé constant, le débit volumétrique d'une seconde pompe d'alimentation (13) est détecté, comparé à la grandeur de référence et, en fonction d'une différence éventuellement présente se rapportant à la masse volumétrique, le convertisseur de vitesse (1) est commandé pour le réglage d'une vitesse de pompe nécessaire, **caractérisé en ce qu'**il est prévu pour le convertisseur de vitesse (1) un actionneur (10) déterminant le volume déplacé de la seconde pompe d'alimentation (13), **en ce que** le convertisseur de vitesse (1) entraîné par le dispositif d'entraînement (4), entraînant la première pompe d'alimentation (3), est prévu entre la seconde pompe d'alimentation (13) entraînée par le dispositif d'entraînement (4) et la première pompe d'alimentation (3), la vitesse de rotation de la première pompe d'alimentation (3) est variable en fonction de la différence entre la grandeur de sortie de la seconde pompe d'alimentation (13) et la grandeur de référence et les deux pompes d'alimentation (3 et 13) sont réunies pour former le dispositif d'alimentation à plusieurs étages.

2. Dispositif d'alimentation à plusieurs étages avec une grandeur de sortie constante, par exemple le volume déplacé ou la puissance de sortie, qui est entraîné par un dispositif d'entraînement (4) à vitesse de rotation variable, avec une première pompe d'alimentation (3) dont la vitesse de rotation, pour atteindre la grandeur de sortie souhaitée, est variable de manière appropriée à l'aide d'un convertisseur de vitesse (1) réglable en continu entraîné par le dispositif d'entraînement (4) et commandé en fonction d'une grandeur de référence, moyennant quoi, pour maintenir la vitesse de pompe, la puissance de sortie de la seconde pompe d'alimentation (13) est détectée et, en fonction de cela, le convertisseur de vitesse (1) est commandé de telle manière que la puissance demandée est également fournie par la première pompe d'alimentation (3), **caractérisé en ce qu'**il est prévu pour le convertisseur de vitesse (1) un actionneur (10) déterminant le volume déplacé de la seconde pompe d'alimentation (13), **en ce que** le convertisseur de vitesse (1) entraîné par le dispositif d'entraînement (4), entraînant la première pompe d'alimentation (3), est prévu entre la seconde pompe d'alimentation (13) entraînée par le dispositif d'entraînement (4) et la première pompe d'alimentation (3), la vitesse de rotation de la première pompe d'alimentation (3) est variable en fonction de la différence entre la grandeur de sortie de la seconde pompe d'alimentation (13) et la grandeur de référence et les deux pompes d'alimentation (3 et 13) sont réunies pour former le dispositif d'alimentation à plusieurs étages.

3. Dispositif selon la revendication 1 ou 2, **caractérisé en ce que** le dispositif d'entraînement (4) est un moteur à combustion interne et **en ce que** les pompes d'alimentation (3, 13) servent à l'alimentation du moteur à combustion interne en huile de graissage.

4. Dispositif selon la revendication 1, 2 ou 3, **caractérisé en ce que** les pompes d'alimentation (3, 13) sont des pompes à engrenages.
